(19) Europäisches Patentamt
European Patent Office
Office européen des brevets

(11) **EP 4 174 818 A1**

(12) **EUROPEAN PATENT APPLICATION**
published in accordance with Art. 153(4) EPC

(43) Date of publication:
**03.05.2023  Bulletin 2023/18**

(21) Application number: **21829975.8**

(22) Date of filing: **14.04.2021**

(51) International Patent Classification (IPC):
*G08G 1/09* (2006.01)    *B60W 40/04* (2006.01)
*B60W 40/06* (2012.01)   *B60W 60/00* (2020.01)
*G05D 1/00* (2006.01)

(52) Cooperative Patent Classification (CPC):
**G05D 1/0011; G08C 17/00;** G05D 2201/0213

(86) International application number:
**PCT/JP2021/015473**

(87) International publication number:
**WO 2021/261058 (30.12.2021 Gazette 2021/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **26.06.2020  JP 2020110428**

(71) Applicant: **Panasonic Intellectual Property Management Co., Ltd.**
**Osaka-shi, Osaka 540-6207 (JP)**

(72) Inventors:
• **HU, Beier**
  **Chuo-ku, Osaka-shi, Osaka 540-6207 (JP)**
• **TAKEUCHI, Kazuma**
  **Chuo-ku, Osaka-shi, Osaka 540-6207 (JP)**
• **JOHN, Stephen William**
  **Chuo-ku, Osaka-shi, Osaka 540-6207 (JP)**
• **OHYAMA, Shinji**
  **Chuo-ku, Osaka-shi, Osaka 540-6207 (JP)**

(74) Representative: **Novagraaf International SA**
**Chemin de l'Echo 3**
**1213 Onex, Geneva (CH)**

(54) **INFORMATION PROCESSING METHOD, INFORMATION PROCESSING TERMINAL, AND INFORMATION PROCESSING SYSTEM**

(57)    An information processing method is executed by a computer, and includes: specifying, when information of an event that requires remote operation of a mobile body is received, a task of the remote operation corresponding to the event (S17); and determining a travel limitation of the mobile body in the remote operation according to the task specified (S21), wherein the travel limitation determined is imposed when the mobile body executes travel control according to the task.

FIG. 2

**Description**

[Technical Field]

The present disclosure relates to an information processing method, an information processing terminal, and an information processing system.

[Background Art]

Remote operation systems in which remote operators at remote locations indirectly operate autonomous vehicles using wireless local area networks (LANs) or mobile phone lines according to need are studied in recent years. For example, when a vehicle is in a state in which autonomous travel is impossible, a remote operator transmits a control signal relating to the travel of the vehicle to the vehicle to thus remotely control the travel of the vehicle.

In the case where the remote operator remotely operates the vehicle, it is desirable to drive the vehicle safely. Patent Literature (PTL) 1 proposes limiting the vehicle speed during remote operation.

[Citation List]

[Patent Literature]

[PTL 1]
Japanese Unexamined Patent Application Publication No. 2017-126193

[Summary of Invention]

[Technical Problem]

With the technique in PTL 1, there is a possibility that the efficiency of remote operation by the remote operator decreases. For example, the technique in PTL 1 uniformly limits the speed of the mobile body during remote operation, but remote operation required in response to an event that has occurred differs according to the event. That is, the speed limitation may not be suitable for remote operation in some cases. This is likely to cause a decrease in the efficiency of remote operation.

The present disclosure therefore provides an information processing method, an information processing terminal, and an information processing system that can suppress a decrease in the efficiency of remote operation while ensuring the safety of a remotely operated mobile body.

[Solution to Problem]

An information processing method according to an aspect of the present disclosure is an information processing method executed by a computer, including: specifying, when information of an event that requires remote operation of a mobile body is received, a task of the remote operation corresponding to the event; and determining a travel limitation of the mobile body in the remote operation according to the task specified, wherein the travel limitation determined is imposed when the mobile body executes travel control according to the task.

An information processing terminal according to an aspect of the present disclosure is an information processing terminal mountable on a mobile body, including: a determiner that determines whether an event that requires remote operation of the mobile body has occurred; a transmitter that transmits information of the event, when the event has occurred; a receiver that receives a travel limitation of the mobile body in the remote operation and an instruction of the remote operation based on the information of the event transmitted; and a controller that causes the mobile body to execute travel control according to the instruction of the remote operation under the travel limitation received.

An information processing system according to an aspect of the present disclosure includes: a determiner that determines whether an event that requires remote operation of a mobile body has occurred; a specifier that specifies a task of the remote operation corresponding to the event, when the determiner determines that the event has occurred; a determiner that determines a travel limitation of the mobile body in the remote operation according to the task specified; and a controller that imposes the travel limitation determined, when the mobile body executes travel control according to the task specified.

[Advantageous Effects of Invention]

The information processing method, etc. according to an aspect of the present disclosure can suppress a decrease in the efficiency of remote operation while ensuring the safety of a remotely operated mobile body.

[Brief Description of Drawings]

[FIG. 1]

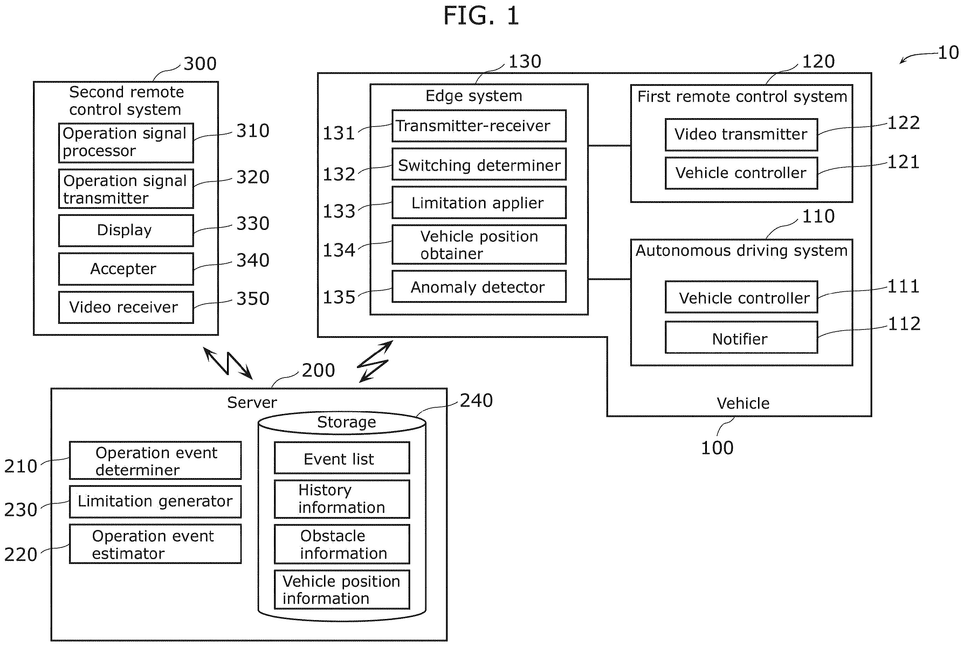

FIG. 1 is a block diagram illustrating the functional structure of a vehicle control system according to an embodiment.
[FIG. 2]

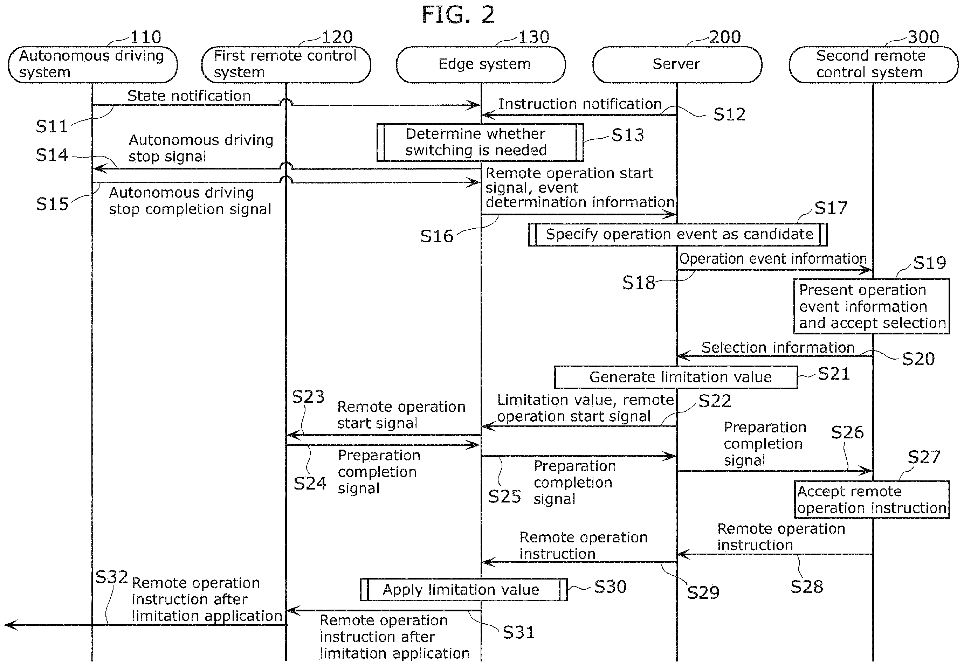

FIG. 2 is a sequence diagram illustrating the operation of the vehicle control system according to the embodiment.
[FIG. 3]

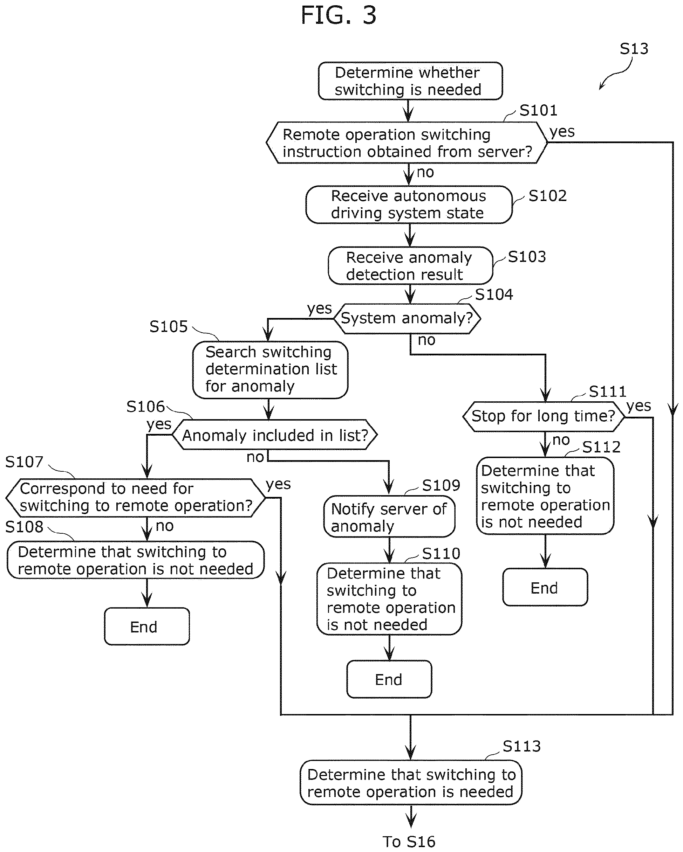

FIG. 3 is a flowchart illustrating an operation of determining whether switching is needed in FIG. 2.
[FIG. 4]

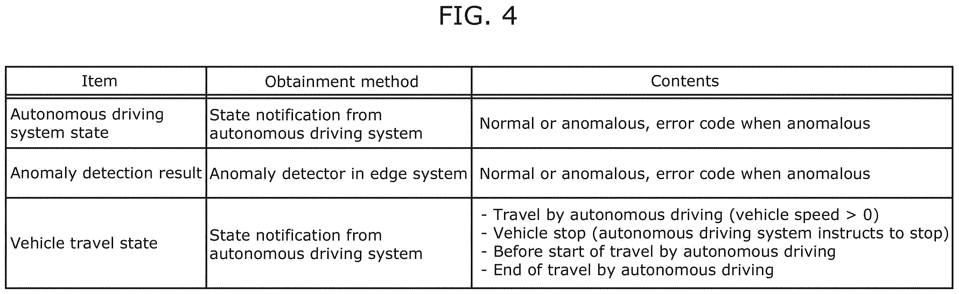

FIG. 4 is a diagram illustrating each type of information obtained by an edge system according to the embodiment.
[FIG. 5]

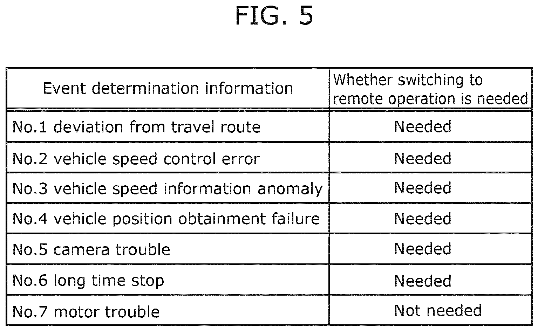

FIG. 5 is a diagram illustrating an example of a switching determination list according to the embodiment.
[FIG. 6]

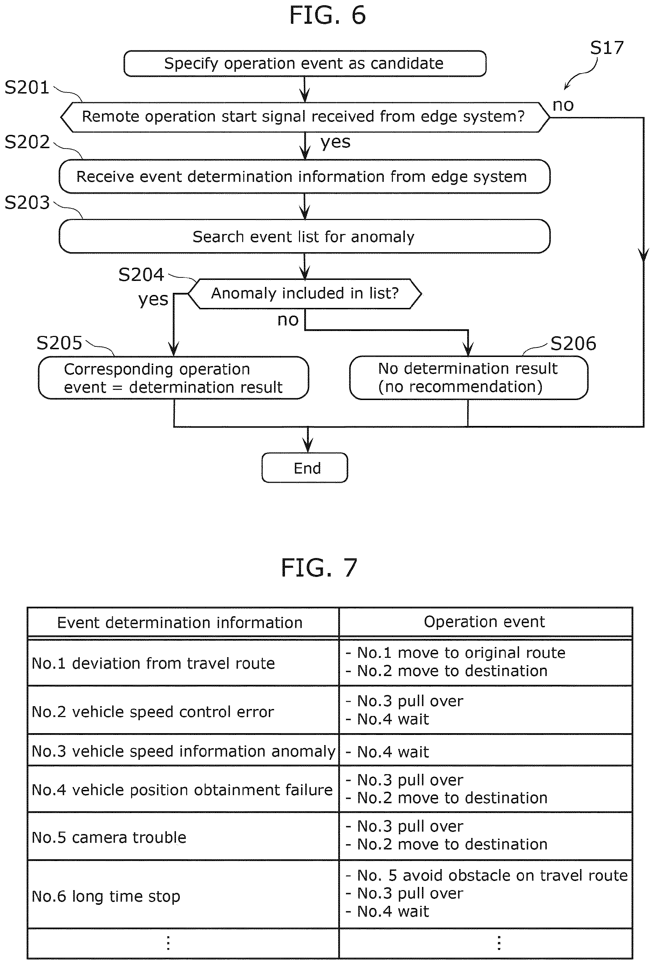

FIG. 6 is a flowchart illustrating an operation of determining an operation event in FIG. 2.
[FIG. 7]
FIG. 7 is a diagram illustrating an example of an event list according to the embodiment.
[FIG. 8]

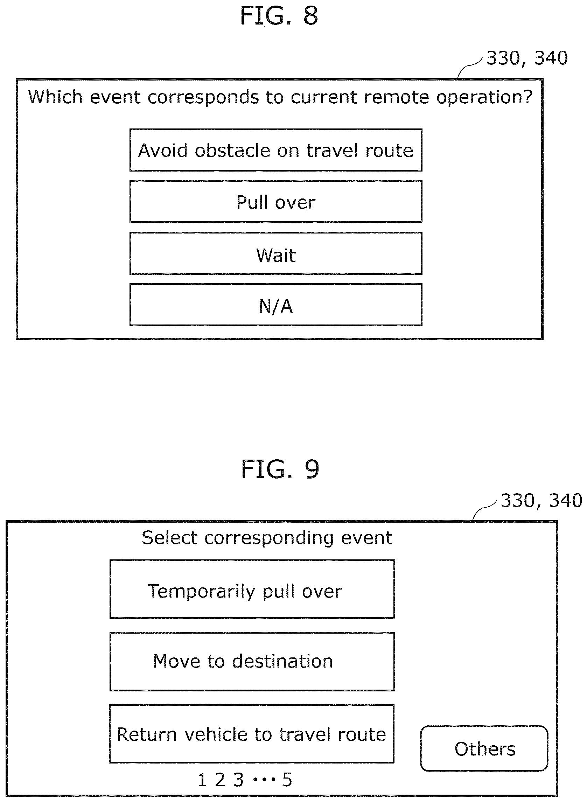

FIG. 8 is a diagram illustrating an example of information displayed by a display according to the embodiment.
[FIG. 9]
FIG. 9 is a diagram illustrating another example of information displayed by the display according to the embodiment.
[FIG. 10]

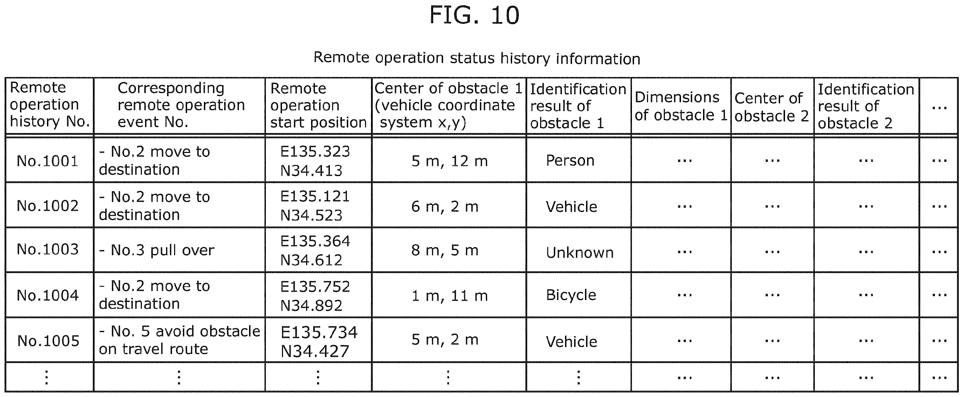

FIG. 10 is a diagram illustrating an example of remote operation status history information according to the embodiment.
[FIG. 11]

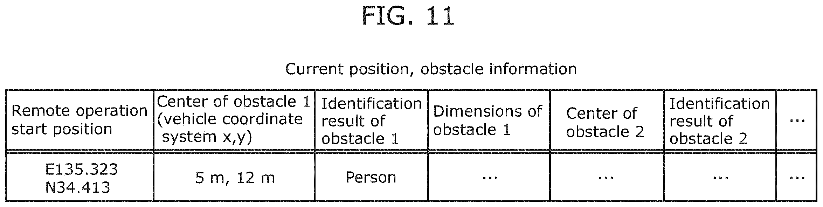

FIG. 11 is a diagram illustrating an example of the current status of a vehicle according to the embodiment.
[FIG. 12]

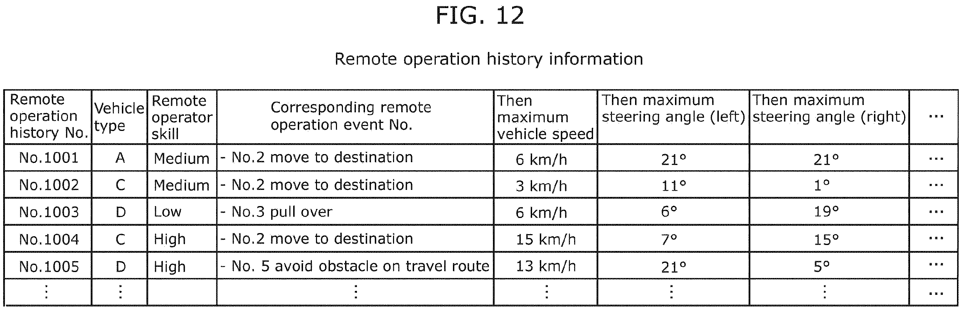

FIG. 12 is a diagram illustrating an example of remote operation history information according to the embodiment.
[FIG. 13]

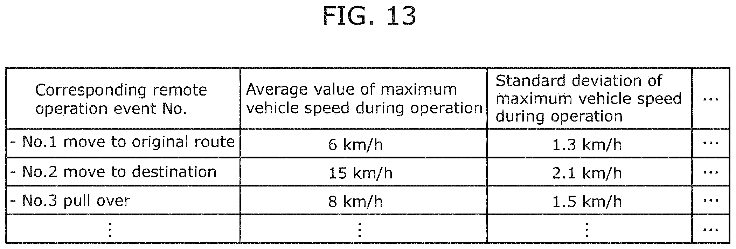

FIG. 13 is a diagram explaining limitation value calculation according to the embodiment.
[FIG. 14]

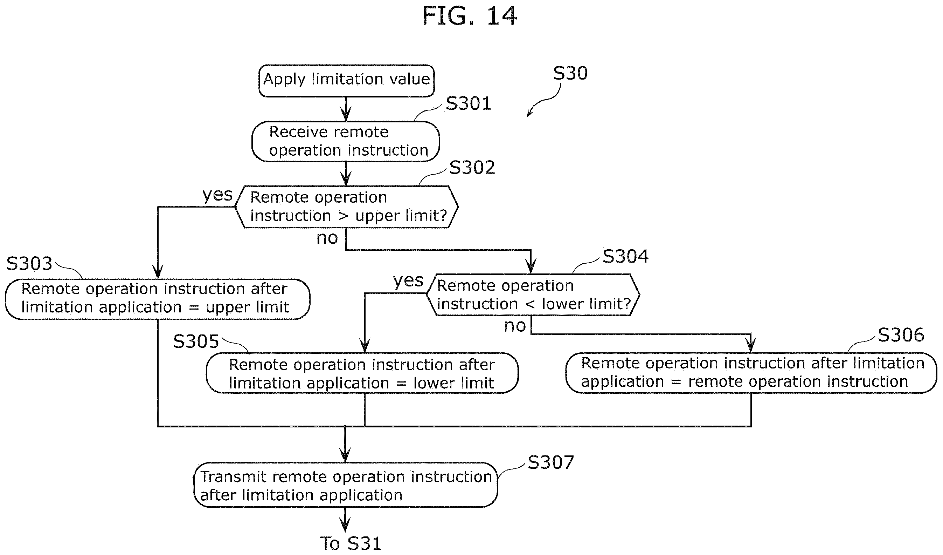

FIG. 14 is a flowchart illustrating an operation of applying a limitation value in FIG. 2.
[FIG. 15]

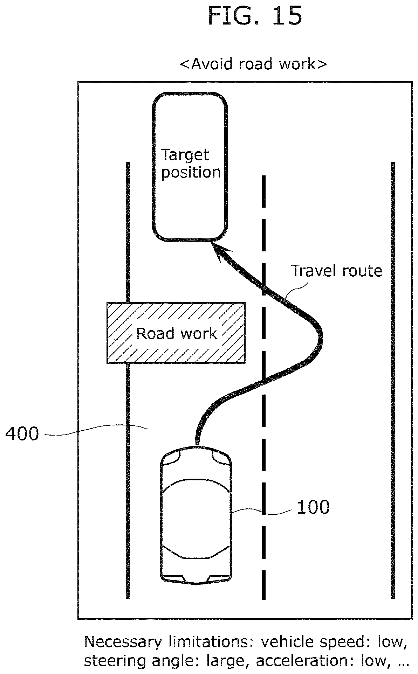

FIG. 15 is a first diagram explaining a problem to the present disclosure.
[FIG. 16]

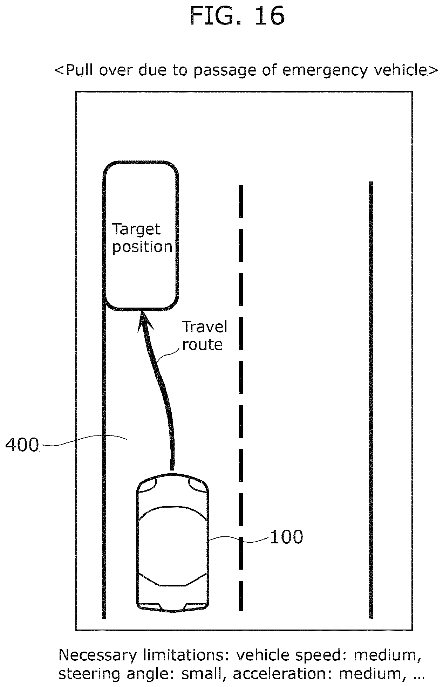

FIG. 16 is a second diagram explaining the problem to the present disclosure.

[Description of Embodiments]

(Underlying Knowledge Forming Basis of the Present Disclosure)

In relation to the techniques described in the Background Art section, the inventors have found the following problem. FIG. 15 is a first diagram explaining the problem to the present disclosure. FIG. 16 is a second diagram explaining the problem to the present disclosure. In FIG. 15 and FIG. 16, suppose vehicle 100 that was traveling in an autonomous driving mode has become unable to travel in the autonomous driving mode (for example, has become impossible to travel) and stopped on road 400.
FIG. 15 illustrates the case where vehicle 100 travels while avoiding a road work. FIG. 16 illustrates the case where vehicle 100 pulls over (temporarily pulls over) because an emergency vehicle passes. In FIG. 15 and FIG. 16, the current position of vehicle 100 is a remote operation start position, and vehicle 100 is remotely operated to a target position. Avoiding a road work by remote operation and pulling over to allow an emergency vehicle to pass by remote operation are each an example of an operation event (task) during remote operation. In other words, FIG. 15 and FIG. 16 each illustrate, for example, an operation necessary at a different operation event.

In FIG. 15, remote operation with vehicle speed "low", steering angle "large", and acceleration "low" is performed. In detail, a remote operator drives vehicle 100 slowly while greatly steering vehicle 100 along a sharply curved travel route.

In FIG. 16, remote operation with vehicle speed "medium", steering angle "small", and acceleration "medium" is performed. In detail, the remote operator drives vehicle 100 relatively fast while slightly steering vehicle 100 along a gently curved travel route.

Thus, in the case of remotely operated driving, the details of the necessary operation are often different depending on the operation event for which the remote operation is performed. The travel limitation in the remote operation is desirably set to enhance the safety and also improve the travel efficiency.

With the technique described in PTL 1, however, the travel limitation is uniformly set regardless of the operation event of remote operation, which may cause a decrease in the efficiency of remote operation. There is also a possibility that the travel limitation is not suitable for the remote operation and as a result the safety decreases.

In view of this, the inventors of the present application have studied an information processing method, etc. that can suppress a decrease in the efficiency of remote operation while ensuring the safety of a remotely operated mobile body, and invented the following information processing method, etc.

An information processing method according to an aspect of the present disclosure is an information processing method executed by a computer, including: specifying, when information of an event that requires remote operation of a mobile body is received, a task of the remote operation corresponding to the event; and determining a travel limitation of the mobile body in the remote operation according to the task specified, wherein the travel limitation determined is imposed when the mobile body executes travel control according to the task.

In this way, the travel limitation can be determined for each task of remote operation. That is, the travel limitation suitable for the task of remote operation can be determined. This can prevent any unnecessary travel limitation from being imposed during remote operation, and thus suppress a decrease in the efficiency of remote operation while ensuring the safety of the remotely operated mobile body. In other words, given that the task of remote operation may differ according to the state of the mobile body, the travel limitation according to the state of the mobile body can be imposed. Moreover, since the travel limitation is appropriately set for the task, the safety of the mobile body can be improved depending on the type of the task or the situation in which remote operation is performed. For example, when pulling over on an expressway, relaxing the travel limitation can reduce the risk of being hit by another vehicle.

For example, the information processing method may include: obtaining an execution environment of the task, wherein in the determining, the travel limitation is determined according to the task and the execution environment.

In this way, the travel limitation is determined further using the execution environment of the task. The travel limitation more suitable for the task of remote operation can thus be determined.

For example, the execution environment may include at least one of an attribute, an ability, or an operation history of a remote operator who executes the task.

In this way, the travel limitation is determined further using at least one of the attribute, ability, or operation history of the remote operator. The travel limitation according to the remote operator who executes the task of remote operation can thus be determined.

For example, the execution environment may include at least one of an attribute, a performance, or a specification of the mobile body remotely operated by execution of the task.

In this way, the travel limitation is determined further using at least one of the attribute, performance, or specification of the remotely operated mobile body. The travel limitation according to the remotely operated mobile body can thus be determined.

For example, the execution environment may include at least one of weather, a road surface state, or a traffic environment of a location in which the mobile body remotely operated by execution of the task is situated.

In this way, the travel limitation is determined further using at least one of the weather, road surface, or traffic environment of the current location of the remotely operated mobile body. The travel limitation according to the environment of the current location of the remotely operated mobile body (for example, the location where the mobile body has become unable to travel) can thus be determined.

For example, in the determining, the travel limitation may be determined using a model generated based on past tasks and execution environments.

In this way, the travel limitation can be determined with no need to accumulate data for determining the travel limitation, such as remote operation history information indicating history of remote operation in the past.

For example, the specifying may include specifying one or more candidate tasks that are each a task estimated based on the information of the event, presenting the one or more candidate tasks specified to a remote operator, and specifying the task according to input of the remote operator based on the one or more candidate tasks presented.

In this way, the candidate tasks can be presented to the remote operator. Letting the remote operator perform input based on the presented candidate tasks can make the remote operator aware of the purpose of the remote operation. This is expected to reduce redundant operation by the remote operator during the remote operation. In addition, by presenting the candidate tasks, the remote operator can be saved time and trouble in task selection.

For example, the one or more candidate tasks presented may be each specified using a model generated based on the information of the event at each past time and input of the remote operator based on the candidate task at the past time.

In this way, the candidate tasks to be presented can be determined with no need to prepare data for determining the candidate tasks to be presented, such as an event list.

For example, the travel limitation determined may be imposed when the mobile body executes the travel control according to an instruction of the remote operation according to the task specified.

In this way, the travel limitation can be imposed in response to the remote operation instruction from the remote operator who executes the task, with it being possible to suppress a decrease in task execution efficiency.

For example, the travel limitation may include a limitation on at least one of speed, acceleration, braking, or steering.

In this way, the limitation on at least one of speed, acceleration, braking, or steering can be imposed in response to the remote operation instruction from the remote operator.

For example, the information processing method may further include: transmitting the travel limitation determined to a terminal mounted on the mobile body, wherein the travel control according to an instruction of the remote operation is executed in the mobile body under the travel limitation transmitted.

In this way, in the case where the travel control is determined in the mobile body, the travel limitation can be imposed by the travel control executed according to the remote operation instruction in the mobile body.

For example, the information processing method may further include: determining the travel control according to an instruction of the remote operation under the travel limitation; and transmitting the travel control determined to a terminal mounted on the mobile body, wherein the travel control transmitted is executed in the mobile body.

In this way, in the case where the travel control is determined in the device that remotely operates the mobile body, the travel control to be executed by the mobile body can be determined in consideration of the travel limitation.

An information processing terminal according to an aspect of the present disclosure is an information processing terminal mountable on a mobile body, including: a determiner that determines whether an event that requires remote operation of the mobile body has occurred; a transmitter that transmits information of the event, when the event has occurred; a receiver that receives a travel limitation of the mobile body in the remote operation and an instruction of the remote operation based on the information of the event transmitted; and a controller that causes the mobile body to execute travel control according to the instruction of the remote operation under the travel limitation received.

In this way, the information processing terminal can cause the mobile body to execute the travel control according to the remote operation instruction under the travel limitation according to the event that requires remote operation of the mobile body. Since the information processing terminal can be prevented from imposing any unnecessary travel limitation for the remote operation instruction, a decrease in the efficiency of remote operation can be suppressed while ensuring the safety of the remotely operated mobile body.

An information processing system according to an aspect of the present disclosure includes: a determiner that determines whether an event that requires remote operation of a mobile body has occurred; a specifier that specifies a task of the remote operation corresponding to the event, when the determiner determines that the event has occurred; a determiner that determines a travel limitation of the mobile body in the remote operation according to the task specified; and a controller that imposes the travel limitation determined, when the mobile body executes travel control according to the task specified.

This has the same advantageous effects as the foregoing information processing method.

These general and specific aspects may be implemented using a system, a device, a method, an integrated circuit, a computer program, or a non-transitory computer-readable recording medium such as CD-ROM, or any combination of systems, devices, methods, integrated circuits, computer programs, and recording media.

Hereinafter, certain exemplary embodiments will be described in greater detail with reference to the accompanying drawings. Each of the exemplary embodiments described below shows a general or specific example. The numerical values, elements, steps, the processing order of the steps etc. shown in the following exemplary embodiments are mere examples, and therefore do not limit the scope of the appended claims and their equivalents. Therefore, among the elements in the following exemplary embodiments, those not recited in any one of the independent claims are described as optional elements.

Each drawing is a schematic and does not necessarily provide precise depiction. For example, scale and the like are not necessarily consistent throughout the drawings. The substantially same elements are given the same reference marks throughout the drawings, and repeated description is omitted or simplified.

In the specification, the terms indicating the relationships between elements, such as "same" and "matching", the numerical values, and the numerical ranges are not expressions of strict meanings only, but are expressions of meanings including substantially equivalent ranges, for example, allowing for a difference of about several percent.

[Embodiment]

An information processing system, etc. according to an embodiment of the present disclosure will be described below, with reference to FIG. 1 to FIG. 14.

[1. Structure of Information Processing System]

The functional structure of vehicle control system 10 according to this embodiment will be described below, with reference to FIG. 1. FIG. 1 is a block diagram illustrating the functional structure of vehicle control system 10 according to this embodiment.

As illustrated in FIG. 1, vehicle control system 10 includes vehicle 100, server 200, and second remote control system 300. Vehicle 100 and server 200 are communicably connected to each other, and server 200 and second remote control system 300 are communicably connected to each other. Vehicle control system 10 is a system in which a remote operator at a remote location remotely monitors and operates the travel of vehicle 100 according to need. Vehicle control system 10 is an example of an information processing system for controlling the travel of vehicle 100.

Vehicle 100 is an example of a mobile body in which one or more persons ride, and is remotely monitored or operated by the remote operator according to need. Vehicle 100 is an autonomous car (autonomous vehicle) capable of switching between autonomous driving and remotely operated driving. In detail, vehicle 100 is a vehicle capable of selectively switching between an autonomous driving mode of traveling by autonomous driving and a remote operation mode of traveling by remote operation. The autonomous car is not limited as long as it can be ridden by one or more persons and is capable of autonomous driving, and may be an autonomous bus, an autonomous taxi, an autonomous private car, an autonomous truck, an autonomous construction vehicle (for example, dump truck), or the like.

Vehicle 100 includes autonomous driving system 110, first remote control system 120, and edge system 130. Herein, the term "vehicle" denotes a vehicle on which autonomous driving system 110 and first remote control system 120 are mounted.

Autonomous driving system 110 is a control system for autonomous driving mounted on vehicle 100. Autonomous driving system 110 controls the travel of vehicle 100 when vehicle 100 travels in the autonomous driving mode. For example, autonomous driving system 110 is a control system capable of achieving autonomous travel at an autonomous driving level higher than or equal to a predetermined level. The predetermined level is, for example, Level 3 in the level definition of the Society of Automotive Engineers (SAE), although not limited to such.

Autonomous driving system 110 obtains vehicle information of vehicle 100 based on sensing information of various sensors (not illustrated) mounted on vehicle 100. For example, autonomous driving system 110 obtains the vehicle information of vehicle 100 in the autonomous driving mode. The vehicle information includes at least information relating to the travel of vehicle 100. In this embodiment, the vehicle information includes the information relating to the travel of vehicle 100 and information relating to the surroundings of vehicle 100. For example, the information relating to the travel of vehicle 100 includes at least one of the current speed, steering angle, or acceleration of vehicle 100. For example, the information relating to the surroundings of vehicle 100 includes at least one of information relating to obstacles (obstacle information) or video. The information relating to obstacles is information indicating the position and speed of each obstacle around vehicle 100. Non-limiting examples of the various sensors include a speed sensor, a steering angle sensor, LIDAR (light detection and ranging), radar (for example, millimeter-wave radar), an ultrasonic sensor, and an imaging device.

Autonomous driving system 110 includes vehicle controller 111 and notifier 112.

Vehicle controller 111 controls the travel of vehicle 100 based on a travel plan of autonomous driving. Vehicle controller 111 controls the speed, steering angle, etc. of vehicle 100 based on the travel plan. The travel plan includes a travel route, speed, etc.

Notifier 112 notifies edge system 130 of the current state of vehicle 100 based on the vehicle information obtained in the autonomous driving mode. Notifier 112 may further notify edge system 130 of the obstacle information. When vehicle 100 becomes unable to travel, notifier 112 notifies edge system 130 that vehicle 100 has become unable to travel.

First remote control system 120 is a control system for remotely operated driving mounted on vehicle 100. When vehicle 100 travels in the remote operation mode, first remote control system 120 controls the travel of vehicle 100 based on a remote operation instruction (for example, control command) of remote operation obtained from second remote control system 300.

First remote control system 120 obtains vehicle information of vehicle 100 based on sensing information of various sensors (not illustrated) mounted on vehicle 100. For example, first remote control system 120 obtains the vehicle information of vehicle 100 in the remote operation mode. The vehicle information includes at least video. The vehicle information may include at least one of the current speed, steering angle, acceleration, or obstacle information of vehicle 100.

First remote control system 120 includes vehicle controller 121 and video transmitter 122.

Vehicle controller 121 controls the travel of vehicle 100 based on the remote operation instruction. Vehicle controller 121 controls the speed, steering angle, etc. of vehicle 100 based on the remote operation instruction. The remote operation instruction includes information indicating speed, steering angle, etc.

Video transmitter 122 transmits the video obtained from the imaging device in the remote operation mode, to edge system 130. Video transmitter 122 may transmit other vehicle information (for example, the current speed, steering angle, acceleration, obstacle information, etc.) obtained from the various sensors in the remote operation mode, to edge system 130.

Edge system 130 generates information to be transmitted to server 200 based on the information obtained from autonomous driving system 110 and first remote control system 120, and transmits the generated information. For example, edge system 130 transmits event determination information indicating an event that has caused vehicle 100 to become unable to travel, to server 200. The event determination information is information used when server 200 determines whether switching to remote operation is needed, and is generated based on at least one of the sensing information from the various sensors in vehicle 100, the position of vehicle 100 obtained by vehicle position obtainer 134, or an anomaly detection result of anomaly detector 135. Moreover, upon obtaining information from second remote control system 300, edge system 130 outputs the obtained information to at least one of autonomous driving system 110 or first remote control system 120. In other words, edge system 130 relays communication between each structural element in vehicle 100 and server 200. Edge system 130 is an example of an information processing terminal (terminal) mounted on vehicle 100.

Edge system 130 includes transmitter-receiver 131, switching determiner 132, limitation applier 133, vehicle position obtainer 134, and anomaly detector 135.

Transmitter-receiver 131 performs communication between edge system 130 and each structural element (for example, autonomous driving system 110 and first remote control system 120) in vehicle 100, and communication between edge system 130 and server 200. For example, transmitter-receiver 131 includes a communication module. Transmitter-receiver 131 is an example of a transmitter and a receiver.

Switching determiner 132 determines whether to switch the travel mode of vehicle 100 traveling in the autonomous driving mode to the remote operation mode. For example, switching determiner 132 performs the determination during travel in the autonomous driving mode. Switching determiner 132 is an example of a determiner.

Limitation applier 133 determines whether a remote operation instruction obtained from second remote control system 300 satisfies a limitation generated in server 200, during travel in the remote operation mode. In the case where the remote operation instruction does not satisfy the limitation, limitation applier 133 updates the remote operation instruction so as to satisfy the limitation. Limitation applier 133 is an example of a controller.

Vehicle position obtainer 134 obtains the current position of vehicle 100. For example, vehicle position obtainer 134 is implemented by a GPS module that obtains a GPS (Global Positioning System) signal (i.e. a radio wave output from a satellite) and measures the current position of vehicle 100 based on the obtained GPS signal to thus obtain the current position.

Anomaly detector 135 detects whether autonomous driving system 110 is anomalous. Anomaly detector 135 may detect whether autonomous driving system 110 is anomalous based on the reactivity of autonomous driving system 110 (for example, whether autonomous driving system 110 is slow to react) or based on the power consumption of autonomous driving system 110. Anomaly detector 135 may detect whether first remote control system 120 is anomalous. For example, anomaly detector 135 may perform anomaly detection on autonomous driving system 110 during travel in the autonomous driving mode, and perform anomaly detection on first remote control system 120 during travel in the remote operation mode. As a result of edge system 130 including anomaly detector 135, for example, an anomaly undetectable by autonomous driving system 110 can be detected.

Edge system 130 includes at least transmitter-receiver 131, switching determiner 132, and limitation applier 133. In other words, vehicle position obtainer 134 and/or anomaly detector 135 may be omitted from edge system 130.

Each of autonomous driving system 110, first remote control system 120, and edge system 130 may be implemented as one of the functions of an electronic control unit (ECU) as a control device. For example, the ECU may include a processor and memory, and execute a program stored in the memory to implement the functions of each of autonomous driving system 110, first remote control system 120, and edge system 130.

Server 200 performs a process relating to an operation event of remote operation necessary for the current state of vehicle 100 and a process relating to generation of a limitation corresponding to the operation event, based on the information obtained from vehicle 100. Server 200 includes operation event determiner 210, operation event estimator 220, limitation generator 230, and storage 240. The operation event of remote operation is an example of a task of remote operation. The operation event of remote operation is also referred to as "remote operation event".

Operation event determiner 210 estimates an operation event recommended during remote operation in current vehicle 100, based on the event determination information obtained from vehicle 100. For example, operation event determiner 210 specifies an operation event recommended during remote operation in current vehicle 100, based on the event determination information and an event list (see FIG. 7) in which event determination information and operation events are associated with each other. The number of operation events specified by operation event determiner 210 is not limited, and may be one or more. Operation event determiner 210 is an example of a specifier.

Operation event determiner 210 is not limited to estimating the operation event using the event list. For example, operation event determiner 210 may estimate the operation event corresponding to the current event determination information using a model generated based on event determination information at each past time and input of the remote operator based on candidate operation events at the past time. The input of the remote operator is an operation event selected by the remote operator from among the candidate events. The model may be, for example, a machine learning model using a neural network. The machine learning model may be a model learned to receive event determination information as input and output (specify) an operation event to be recommended to the remote operator. The machine learning model is learned using past event determination information as input data and input of the remote operator at the time as reference data (correct information).

Operation event determiner 210 may specify the output of the model obtained by inputting the current event determination information to the model, as the operation event to be recommended. The model may be any model generated using event determination information (parameter) and operation events (parameter).

Operation event estimator 220, in the case where a plurality of operation events are determined by operation event determiner 210, estimates an operation event to be recommended to the remote operator from among the plurality of operation events. Operation event estimator 220 may estimate the operation event to be recommended, based on the similarity between remote operation status history information indicating the status around vehicle 100 during remote operation in a past remote operation event (see FIG. 10) and the current status of vehicle 100 (see FIG. 11). For example, operation event estimator 220 may estimate the ranking of the plurality of operation events (i.e. the order of likelihood of selection). The similarity is, for example, calculated based on the standard Euclidean distance, although not limited to such. Operation event estimator 220 may perform one-hot encoding on a category variable such as an obstacle identification result, as preprocessing for similarity calculation.

Limitation generator 230 determines a travel limitation of vehicle 100 in the remote operation, according to the operation event selected by the remote operator. For example, limitation generator 230 generates the travel limitation according to the operation event to determine the travel limitation. For example, based on the operation event selected by the remote operator and remote operation history information indicating history of remote operation performed in the past (see FIG. 12), limitation generator 230 determines the travel limitation corresponding to the current operation event. Limitation generator 230 generates a travel limitation for each operation event. Limitation generator 230 is an example of a determiner. Although the following will describe generating a limitation value as a travel limitation, the present disclosure is not limited to such.

Limitation generator 230 is not limited to estimating the operation event using the remote operation history information. For example, limitation generator 230 may determine the travel limitation according to the current operation event using a model generated based on each past operation event and a travel limitation imposed at the time. The model may be, for example, a machine learning model using a neural network. The machine learning model may be a model learned to receive an operation event as input and output a travel limitation according to the operation event. The machine learning model is learned using each past operation event as input data and a travel limitation at the time as reference data (correct information).

Limitation generator 230 may determine the output of the model obtained by inputting the current operation event to the model, as the travel limitation according to the operation event.

Limitation generator 230 may be a model generated based on each past operation event and the execution environment of the operation event. For example, limitation generator 230 may determine the travel limitation according to the current operation event, based on a model generated based on each past operation event, the execution environment of the operation event, and the travel limitation imposed at the time. The model may be any model generated using operation events (parameter) and travel limitations (parameter). The execution environment includes various information when the remote operator executes remote operation. For example, the execution environment includes at least one of the below-described remote operator-related information, vehicle-related information, or environment-related information.

Storage 240 stores various information for the operation event determination process and the like. Storage 240 stores at least the event list. In this embodiment, storage 240 further stores history information (remote operation history information), obstacle information, and vehicle position information. These information will be described later.

Operation event estimator 220 may be omitted from server 200. In other words, server 200 is not limited to presenting the operation event based on the foregoing similarity. For example, the order and display form of the plurality of operation events may be set beforehand.

Second remote control system 300, in the case where switching determiner 132 determines that switching from the autonomous driving mode to the remote operation mode is needed, receives a remote operation instruction from the remote operator and transmits the remote operation instruction to vehicle 100 via server 200. Second remote control system 300 includes operation signal processor 310, operation signal transmitter 320, display 330, accepter 340, and video receiver 350.

Operation signal processor 310 obtains a remote operation instruction for remote control by the remote operator, via an operation input device (not illustrated). For example, the operation input device may be implemented by a steering wheel, a foot pedal (for example, accelerator pedal and brake pedal), or a joystick.

Operation signal transmitter 320 transmits the remote operation instruction obtained by operation signal processor 310, to vehicle 100 via server 200.

Display 330 is a user interface that displays various information received by second remote control system 300. For example, display 330 displays video received by video receiver 350, in the remote operation mode. When switching from the autonomous driving mode to the remote operation mode, display 330 displays an operation event determined by operation event determiner 210. In the case of displaying a plurality of operation events, display 330 may change the display form of each operation event according to the estimation result of operation event estimator 220. Display 330 may display an operation event estimated to have higher similarity by operation event estimator 220 so as to be more noticeable than the other operation events. For example, display 330 may display the operation event estimated to have higher similarity by operation event estimator 220 in a larger size than the other operation events, in a different color from the other operation events, or in a blinking state. This can improve the efficiency when the remote operator selects an operation event. Display 330 is, for example, implemented by a liquid crystal display, although not limited to such.

Display 330 is an example of a presenter. The presenter is not limited to display 330, and may be implemented by a sound outputter such as a speaker.

Accepter 340 is a user interface that accepts selection by the remote operator. Accepter 340 is implemented by push buttons, a keyboard, a mouse, a touch panel, etc. Accepter 340 may accept selection by sound. In this embodiment, accepter 340 is a touch panel, and is overlaid on display 330.

Video receiver 350 receives video of the surroundings of vehicle 100 transmitted from video transmitter 122 in the vehicle via server 200, during travel in the remote operation mode. Video receiver 350 causes display 330 to display the received video. This enables the remote operator to check the video of the surroundings of vehicle 100 via display 330 in the remote operation mode.

As described above, for example, vehicle control system 10 may include: switching determiner 132 that determines whether an event that requires remote operation of vehicle 100 has occurred; operation event determiner 210 that specifies an operation event of the remote operation corresponding to the event, when switching determiner 132 determines that the event has occurred; limitation generator 230 that determines a travel limitation of vehicle 100 in the remote operation according to the specified operation event; and limitation applier 133 that imposes the determined travel limitation when vehicle 100 executes travel control according to the specified operation event.

[2. Operation of Vehicle Control System]

The operation of vehicle control system 10 described above will be described below, with reference to FIG. 2 to FIG. 14. FIG. 2 is a sequence diagram illustrating the operation of vehicle control system 10 according to this embodiment. FIG. 2 is a sequence diagram when setting a limitation in remote operation according to an operation event in the case where remote operation is needed in vehicle 100. Suppose vehicle 100 is traveling in the autonomous driving mode.

As illustrated in FIG. 2, autonomous driving system 110 transmits state notification indicating the current state of vehicle 100 to edge system 130, during travel in the autonomous travel mode (S11). The state notification is notification indicating the current state of vehicle 100, and is transmitted to edge system 130 by notifier 112. For example, the state notification includes the state of each sensor mounted on vehicle 100 (such as an anomaly in the sensor), the state of autonomous driving system 110, and the like. The state notification is any information indicating the state, and may be notification including information of whether there is an anomaly, or notification including identification information (for example, error code) for identifying the anomaly.

The state notification may include information relating to the current travel state of vehicle 100. The information relating to the travel state may include, for example, information indicating whether vehicle 100 is traveling by autonomous driving, whether vehicle 100 is stopped (for example, whether autonomous driving system 110 outputs a stop instruction), and/or whether vehicle 100 is before start of, during, or after end of travel by autonomous driving.

Autonomous driving system 110 transmits the state notification to edge system 130 successively or at predetermined time intervals.

Server 200 transmits instruction notification to determine whether to perform switching from the autonomous driving mode to the remote operation mode, to edge system 130 (S12). The determination of whether to perform switching is, for example, to determine whether vehicle 100 is in a state that requires switching from the autonomous driving mode to the remote operation mode, and is also referred to as "determining whether switching is needed".

Edge system 130, having obtained the state notification from autonomous driving system 110, determines whether switching from the autonomous driving mode to the remote operation mode is needed (S13). In this embodiment, after obtaining the state notification from autonomous driving system 110 and obtaining the instruction notification from server 200, edge system 130 determines whether switching is needed.

An example of the operation of determining whether switching is needed by edge system 130 will be described below, with reference to FIG. 3 to FIG. 5. FIG. 3 is a flowchart illustrating the operation of determining whether switching is needed (S13) in FIG. 2.

As illustrated in FIG. 3, switching determiner 132 in edge system 130 determines whether a remote operation switching instruction is obtained from server 200 (S101). The remote operation switching instruction is an instruction to switch from the autonomous driving mode to the remote operation mode regardless of the result of the determination of whether switching is needed by switching determiner 132, and can be regarded as an instruction for forcefully switching to the remote operation mode. For example, the remote operation switching instruction is transmitted from server 200 to edge system 130 as a result of the remote operator performing an operation for switching to the remote operation mode.

In the case where switching determiner 132 obtains the remote operation switching instruction from server 200 via transmitter-receiver 131 (S101: yes), switching determiner 132 advances to Step S113, and determines that switching to remote operation is needed. In the case where switching determiner 132 does not obtain the remote operation switching instruction from server 200 (S101: no), switching determiner 132 performs the process from Step S102 onward. In detail, switching determiner 132 performs a process of determining whether switching is needed.

Switching determiner 132 receives an autonomous driving system state (S102). Switching determiner 132 may obtain the autonomous driving system state by (newly) receiving state notification from autonomous driving system 110, or obtain the autonomous driving system state by reading state notification received before Step S101 and stored in a storage (not illustrated). For example, switching determiner 132 obtains the most recent state notification as the autonomous driving system state.

Switching determiner 132 then receives an anomaly detection result from anomaly detector 135 (S103). For example, switching determiner 132 receives the most recent anomaly detection result. Switching determiner 132 may further obtain the result of obtaining the current position from vehicle position obtainer 134. The current position includes, for example, at least one of latitude, longitude, or altitude. Although an example in which switching determiner 132 obtains the anomaly detection result and the current position obtainment result will be described below, switching determiner 132 may not obtain the anomaly detection result and/or the current position obtainment result. For example, Step S103 may be omitted.

Each type of information obtained by switching determiner 132 will be described below, with reference to FIG. 4. FIG. 4 is a diagram illustrating each type of information obtained by edge system 130 according to this embodiment.

As illustrated in FIG. 4, switching determiner 132 in edge system 130 obtains the autonomous driving system state by the state notification from autonomous driving system 110. For example, the state notification includes information of whether autonomous driving system 110, each sensor, and the like are normal or anomalous, and an error code in the case where any of autonomous driving system 110, each sensor, and the like is autonomous. Switching determiner 132 in edge system 130 also obtains the anomaly detection result from anomaly detector 135 in edge system 130. The anomaly detection result includes information of whether autonomous driving system 110, each sensor, and the like are normal or anomalous, and an error code in the case where any of autonomous driving system 110, each sensor, and the like is autonomous. Switching determiner 132 in edge system 130 also obtains the vehicle travel state by the state notification from autonomous driving system 110. The vehicle travel information indicates the current travel status of vehicle 100, and indicates, for example, that vehicle 100 is traveling by autonomous driving (vehicle speed > 0), that vehicle 100 is stopped (autonomous driving system 110 instructs vehicle 100 to stop), that vehicle 100 is before start of travel by autonomous driving, that vehicle 100 is after end of travel by autonomous driving, etc.

Referring back to FIG. 2, switching determiner 132 then determines whether autonomous driving system 110 is anomalous, based on the state notification (S104). For example, in the case where switching determiner 132 obtains an error code, switching determiner 132 determines that autonomous driving system 110 is anomalous.

In the case where autonomous driving system 110 is anomalous (S104: yes), switching determiner 132 searches a switching determination list for the anomaly (S105). Switching determiner 132 determines whether the anomaly is such an anomaly that requires switching from the autonomous driving mode to the remote operation mode, using the switching determination list. FIG. 5 is a diagram illustrating an example of the switching determination list according to this embodiment.

As illustrated in FIG. 5, the switching determination list is a list in which event determination information and information of whether switching to remote operation is needed are associated with each other. The event determination information indicates the current state of vehicle 100 specified based on the information illustrated in FIG. 4. FIG. 5 illustrates event determination information No. 1 to No. 7 as an example. The event indicated by each item of event determination information is an example of an event that occurs.

"No. 1 deviation from travel route" indicates, for example, that vehicle 100 deviates from a travel plan of autonomous driving by autonomous driving system 110. Switching determiner 132 can determine whether vehicle 100 deviates from the travel route, based on the travel plan and the position obtainment result. "No. 2 vehicle speed control error" indicates, for example, that the speed of vehicle 100 cannot be controlled by autonomous driving control by autonomous driving system 110. Switching determiner 132 can determine whether there is a vehicle speed control error, based on the state notification or the anomaly detection result.

"No. 3 vehicle speed information anomaly" indicates, for example, that the speed of vehicle 100 is anomalous. The speed anomaly indicates, for example, that the current speed is not the speed included in the travel plan or the current speed exceeds the prescribed speed (for example, legal speed). Switching determiner 132 can determine whether there is a vehicle speed information anomaly, based on the vehicle travel state. "No. 4 vehicle position obtainment failure" indicates that vehicle position obtainer 134 has failed to obtain the current position of vehicle 100. Switching determiner 132 can determine whether vehicle position obtainer 134 has failed to obtain the position of vehicle 100, based on the result of obtaining the current position of vehicle 100 by vehicle position obtainer 134.

"No. 5 camera trouble" indicates, for example, that the imaging device mounted on vehicle 100 has a trouble. Switching determiner 132 can determine whether there is a camera trouble, based on the state notification or the anomaly detection result. "No. 6 long time stop" indicates, for example, that vehicle 100 is stopped continuously for at least a predetermined time. Switching determiner 132 can determine whether vehicle 100 is stopped for a long time, based on the vehicle travel state. "No. 7 motor trouble" indicates, for example, that a drive motor mounted on vehicle 100 has a trouble. Switching determiner 132 can determine whether there is a motor trouble, based on the state notification or the anomaly detection result.

States No. 1 to No. 6 are each a state in which remote operation by the remote operator is possible. Therefore, the information of whether switching to remote operation is needed in each of states No. 1 to No. 6 is "needed". State No. 7 is a state in which vehicle 100 itself is unable to travel and thus remote operation by the remote operator is impossible. Therefore, the information of whether switching to remote operation is needed in state No. 7 is "not needed". Other examples where the information of whether switching to remote operation is needed is "not needed" include an instance in which the error code is obtained but the anomaly can be handled by autonomous driving system 110 (not illustrated).

The switching determination list is stored, for example, in a storage (not illustrated) in edge system 130 beforehand.

Referring back to FIG. 3, in the case where the anomaly is included in the switching determination list (S106: yes), switching determiner 132 determines whether the anomaly corresponds to the need for switching to remote operation (S107). For example, in the case where the current state of the vehicle deviates from the travel route, the corresponding information is included in the event determination information, so that switching determiner 132 determines yes in Step S106. For example, in the case where the current state of the vehicle deviates from the travel route, switching to remote operation is needed, so that switching determiner 132 determines yes in Step S107.

In the case where the anomaly does not correspond to the need for switching to remote operation (S107: no), switching determiner 132 determines that switching to remote operation is not needed (S108). In this case, the process from Step S16 onward in FIG. 2 is not performed. Hereafter, the process from Step S16 onward in FIG. 2 is equally not performed in the case where switching determiner 132 determines that switching to remote operation is not needed. In the case where the anomaly corresponds to the need for switching to remote operation (S107: yes), switching determiner 132 advances to Step S113.

In the case where the anomaly is not included in the switching determination list (S106: no), switching determiner 132 notifies server 200 of the anomaly (S109). As a result of server 200 transmitting the anomaly to second remote control system 300, for example, the remote operator can be notified of the occurrence of an unexpected anomaly. For example, in the case where the current state of the vehicle is a motor trouble, switching determiner 132 transmits information indicating the motor trouble to server 200. Switching determiner 132 then determines that switching to remote operation is not needed (S110).

In the case where autonomous driving system 110 is not anomalous (S104: no), switching determiner 132 determines whether vehicle 100 is stopped for a long time (S111). The long time is, for example, set beforehand and stored in the storage (not illustrated). For example, the long time may be several minutes or several tens of minutes.

In the case where vehicle 100 is not stopped for a long time (Sill: no), switching determiner 132 determines that switching to remote operation is not needed (S112). In the case where vehicle 100 is stopped for a long time (Sill: yes), switching determiner 132 determines that switching to remote operation is needed (S113). That is, switching determiner 132 determines that switching from the autonomous driving mode to the remote operation mode is needed. The case where switching determiner 132 determines that switching to remote operation is needed will be described below.

Edge system 130 is not limited to performing the process illustrated in FIG. 3 when the instruction notification from server 200 is obtained, and may perform the process from Step S102 onward in FIG. 3 each time the state notification is obtained or at predetermined time intervals.

Referring back to FIG. 2, in the case where switching to remote operation is needed, switching determiner 132 transmits an autonomous driving stop signal for stopping autonomous driving of vehicle 100 to autonomous driving system 110 (S14). Having received the autonomous driving stop signal, autonomous driving system 110 stops vehicle 100 at a safe position, and then stops travel control for vehicle 100. Autonomous driving system 110 then transmits an autonomous driving stop completion signal indicating that stopping autonomous driving is completed, to edge system 130 (S15).

Having obtained the autonomous driving stop completion signal, switching determiner 132 in edge system 130 transmits a remote operation start signal indicating to start remote operation and event determination information to server 200 (S16). For example, switching determiner 132 transmits the remote operation start signal and subsequently transmits the event determination information. In the case where switching determiner 132 determines that switching to remote operation is needed, switching determiner 132 transmits the event determination information to server 200. The event determination information transmitted is information indicating an event (occurred event) that causes remote operation to be needed in vehicle 100, and may be an error code or the like. The remote operation start signal and the event determination information may be transmitted before obtaining the autonomous driving stop completion signal, and may be transmitted upon determining that switching to remote operation is needed.

In Step S16, switching determiner 132 may transmit vehicle information to server 200 in addition to the event determination information.

Having received the remote operation start signal and the event determination information, server 200 performs a process of specifying a candidate operation event to be presented to the remote operator (S17). An operation event indicates the details of operation on vehicle 100 performed when the remote operator remotely operates vehicle 100, and is an example of a task. The task can be regarded as indicating the details of operation of the remote operation corresponding to the current state of vehicle 100 (occurred event) that requires the remote operation. The event determination information is an example of information of an event that requires remote operation of vehicle 100. The candidate operation event is an operation event estimated based on the event determination information, and is an example of a candidate task. Hereafter, the candidate operation event is also referred to as "candidate event".

An example of the operation of specifying an operation event by server 200 will be described below, with reference to FIG. 6 and FIG. 7. FIG. 6 is a flowchart illustrating the operation of specifying an operation event (S17) in FIG. 2.

As illustrated in FIG. 6, operation event determiner 210 in server 200 determines whether the remote operation start signal is received from edge system 130 (S201). In the example in FIG. 2, the remote operation start signal is transmitted from edge system 130. Accordingly, operation event determiner 210, having received the remote operation start signal, determines that the remote operation start signal is received.

Having received the remote operation start signal (S201: yes), operation event determiner 210 receives the event determination information from edge system 130 (S202). For example, operation event determiner 210 receives the event determination information transmitted after the remote operation start signal, from edge system 130.

Operation event determiner 210 then searches the event list for the anomaly indicated by the event determination information (S203). Operation event determiner 210 determines whether the anomaly indicated by the event determination information matches an anomaly in the event list.

The event list will be described below, with reference to FIG. 7. FIG. 7 is a diagram illustrating an example of the event list according to this embodiment. For example, the event list illustrated in FIG. 7 is stored in storage 240 beforehand.

As illustrated in FIG. 7, the event list is a list in which event determination information and operation events of remote operation are associated with each other. For example, the event determination information in the event list is event determination information in the switching determination list in FIG. 5 for which switching to remote operation is needed. Items No. 1 to No. 6 out of items No. 1 to No. 7 illustrated in FIG. 5 are included in FIG. 7. The operation event indicates the operation details of the remote operation performed by the remote operator in the case where vehicle 100 is switched to the remote operation mode.

For example, "No. 1 deviation from travel route" is associated with "No. 1 move to original route" and "No. 2 move to destination". In detail, in the case where the current state of vehicle 100, i.e. the factor determined to require remote operation, is "No. 1 deviation from travel route", the remote operator is recommended to perform remote operation for "No. 1 move to original travel route" and remote operation for "No. 2 move to destination".

Items No. 2 to No. 6 of event determination information are each associated with at least one operation event as well. The number of operation events associated with one item is not limited as long as it is one or more. In the case where the remote operator who executes the operation event corresponding to the item (i.e. executes the remote operation of vehicle 100) is determined beforehand, the details of the operation event may correspond to the remote operator. That is, an operation event corresponding to each item may be set for each remote operator.

In the case where identification information (for example, error code) for identifying an anomaly is received from edge system 130, the event list may be a list in which identification information and operation events are associated with each other.

Referring back to FIG. 6, in the case where the anomaly is included in the event list (S204: yes), operation event determiner 210 sets the corresponding operation event as the determination result (S205). In other words, operation event determiner 210 specifies the corresponding operation event as a candidate event. Thus, by performing the determination in Step S204, operation event determiner 210 specifies the corresponding operation event as a candidate event.

In the case where the anomaly is not included in the event list (S204: no), operation event determiner 210 sets the determination result to indicate that there is no corresponding operation event (i.e. no determination result) (S206). The case where there is no determination result means that the anomaly is an unexpected anomaly and there is no information of an operation event for the anomaly. Hence, operation event determiner 210 does not recommend any operation event for remote operation to the remote operator.

Referring back to FIG. 2, server 200 then transmits operation event information indicating the determination result in Step S204 to second remote control system 300 (S18). The operation event information includes the specified candidate event. The remote operator who remotely operates vehicle 100 may be assigned between Step S17 and Step S18.

Having received the operation event information from server 200, operation signal processor 310 in second remote control system 300 presents the operation event included in the received operation event information, and accepts selection for the operation event from the remote operator (S19). The specification of the operation event is performed, for example, by presenting the candidate event to the remote operator and specifying the operation event according to input of the remote operator based on the presented candidate event.

In this embodiment, operation signal processor 310 displays the operation event information via display 330. FIG. 8 is a diagram illustrating an example of information displayed by display 330 according to this embodiment. FIG. 9 is a diagram illustrating another example of information displayed by display 330 according to this embodiment. FIG. 8 and FIG. 9 illustrate an example of displaying operation event information in the case of event determination information "No. 6 long time stop".

As illustrated in FIG. 8, operation signal processor 310 causes display 330 to display the operation events corresponding to event determination information "No. 6 long time stop", namely, "avoidance of obstacle on travel route", "pull over", and "wait", and "N/A" displayed by default, and accepts, via accepter 340, the result of the remote operator determining which event (operation event) corresponds to the current remote operation. In FIG. 8, operation signal processor 310 accepts the determination result of the remote operator as a result of the remote operator touching the box in which the determined operation event is displayed (touching accepter 340). "Avoidance of obstacle on travel route", "pull over", and "wait" are specific examples of candidate events.

In the case where operation signal processor 310 obtains, in addition to the event determination information, the vehicle information including the current video captured by the imaging device in vehicle 100, operation signal processor 310 may cause display 330 to display the video when the remote operator determines the current operation event of remote operation. The video and the selection image illustrated in FIG. 8 may be displayed side by side.

In the case where the remote operator selects "N/A", operation signal processor 310 may further cause display 330 to produce the display illustrated in FIG. 9. The operation events illustrated in FIG. 9 are operation events other than the operation events corresponding to "No. 6 long time stop". For example, the operation events may be any operation events performed in the past at "No. 6 long time stop" and other than the operation events corresponding to "No. 6 long time stop", or operation events set beforehand. Thus, by displaying operation events set in the event list, the possibility that the remote operator can select an operation event according to the current state of vehicle 100 increases. In the case where there is no corresponding operation event among the operation events illustrated in FIG. 9, the remote operator can select "others". For example, "others" is a choice to impose a uniform limitation or not to impose any limitation during remote operation regardless of the anomaly. Imposing the uniform limitation means, for example, imposing a minimum necessary limitation for safe travel.

In the case where operation signal processor 310 receives operation event information indicating that there is no corresponding operation event (i.e. in the case where operation signal processor 310 receives the result in S206), for example, operation signal processor 310 may cause display 330 to display operation events including at least "others". Operation signal processor 310 may, for example, cause display 330 to display "others" and part or all of the operation events set beforehand.

The display form of each operation event on display 330 will be described below, with reference to FIG. 10 and FIG. 11. FIG. 10 is a diagram illustrating an example of remote operation status history information according to this embodiment. FIG. 11 is a diagram illustrating an example of the current status of vehicle 100 according to this embodiment. The remote operation status history information illustrated in FIG. 10 is remote operation status history information corresponding to "No. 6 long time stop", and is generated by operation event estimator 220 based on history information, obstacle information, and vehicle position information stored in storage 240. For example, operation event estimator 220 generates the remote operation status history information based on the remote operation history information (history information) and the obstacle information and the vehicle position information corresponding to the history information.

Only part of the remote operation history information ("remote operation history No.", "corresponding remote operation event No.", etc.) is illustrated in FIG. 10.

As illustrated in FIG. 10, the remote operation status history information includes "remote operation history No.", "corresponding remote operation event No.", "remote operation start position", "center of obstacle (vehicle coordinate system x, y)", "identification result of obstacle", and "dimensions of obstacle". In FIG. 10, the center of each of obstacles 1 and 2 is illustrated as "center of obstacle", and the identification result of each of obstacles 1 and 2 is illustrated as "identification result of obstacle". The number of obstacles and the items related to each obstacle are not limited to such. The remote operation status history information may further include "dimensions of obstacle", "moving speed", etc. as obstacle-related information. The x axis in the vehicle coordinate system has the front side of vehicle 100 as the plus side, and the y axis in the vehicle coordinate system has the right side of vehicle 100 as the plus side.

"Remote operation history No." indicates the identification number of the remote operation history. "Corresponding remote operation event No." is the identification number of the operation event set beforehand. FIG. 10 illustrates an example in which "corresponding remote operation event No." includes the identification number and the operation event. "Remote operation start position" indicates the start position of the remote operation. "Center of obstacle" indicates the position of an obstacle, and represents, for example, the position in the vehicle coordinate system (the position relative to vehicle 100). "Identification result of obstacle" indicates the result of recognizing the obstacle by image recognition or the like. "Dimensions of obstacle" indicates, for example, the three-dimensional dimensions (length, width, and height) of the obstacle.

For example, remote operation history No. 1001 indicates that, in the case where vehicle 100 was at position (E 135.323, N 34.413) and there was a person at a position of 5 m to the front and 12 m to the right of vehicle 100, remote operation was performed with operation event "No. 2 move to destination".

As illustrated in FIG. 11, the current status of vehicle 100 (current position, obstacle information) includes "remote operation start position", "center of obstacle (vehicle coordinate system x, y)", "identification result of obstacle", and "dimensions of obstacle". "Remote operation start position" indicates the current position of vehicle 100. "Center of obstacle" indicates the position of an obstacle relative to the current position of vehicle 100. "Identification result of obstacle" indicates the result of recognizing the obstacle by image recognition or the like.

Operation event estimator 220 calculates the similarity between the current status of vehicle 100 and each item of remote operation status history information. In FIG. 10 and FIG. 11, remote operation history No. 1001 has the highest similarity as a result of calculation. Operation event determiner 210 may transmit operation event information including the similarity calculation result associated with the operation event to second remote control system 300.

In the case where the received operation event information includes the similarity, operation signal processor 310 in second remote control system 300 changes the display form of each operation event according to its similarity. For example, operation signal processor 310 may display the operation events in descending order of similarity. Thus, a past operation event matching or similar to the current status of vehicle 100 is preferentially displayed, with it being possible to improve the efficiency of operation event determination by the remote operator.

Referring back to FIG. 2, operation signal processor 310 in second remote control system 300 transmits selection information indicating the operation event accepted from the remote operator, to server 200 via operation signal transmitter 320 (S20).

Server 200 then generates a limitation value corresponding to the operation event selected by the remote operator, based on the selection information received from second remote control system 300 (S21). Limitation generator 230 in server 200 generates the limitation value based on the selection information and the remote operation history information. That is, limitation generator 230 generates the limitation value using the past remote operation history. For example, limitation generator 230 generates the limitation value by statistically processing the remote operation history information. In other words, limitation generator 230 determines the travel limitation of vehicle 100 in the remote operation according to the specified operation event (task). The travel limitation includes a limitation of at least one of speed (vehicle speed), acceleration, braking, or steering. That is, the limitation value is a limitation of at least one of speed (vehicle speed), acceleration, braking, or steering. In other words, limitation generator 230 generates the operation limitation of the operation performed by the remote operator according to the specified operation event (task). Limitation generator 230 determines the limitation value by generating the limitation value as described above.

The remote operation history information will be described below, with reference to FIG. 12. FIG. 12 is a diagram illustrating an example of the remote operation history information according to this embodiment.

As illustrated in FIG. 12, the remote operation history information includes "remote operation history No.", "vehicle type", "remote operator skill", "corresponding remote operation event No.", "then maximum vehicle speed", "then maximum steering angle", and "then maximum steering angle". The remote operation history information may further include information such as "then acceleration".

"Vehicle type" is the type of a vehicle, and may be, for example, a use, a model, a model year, or the like. "Remote operator skill" indicates the driving skill of the remote operator in remote operation. "Then maximum vehicle speed" is the maximum value of speed during remote operation by the remote operator. "Then maximum steering angle" is the maximum value of steering angle during remote operation by the remote operator, and is calculated in each of the right and left directions. The speed and the steering angle are, for example, past (then) actual measurements.

For example, remote operation history No. 1001 indicates an example in which the maximum speed is 6 km/h, the maximum steering angle (left) is 25°, and the maximum steering angle (right) is 21° in the case where a vehicle of vehicle type A is subjected to "No. 2 move to destination" from the remote operation start position by a remote operator with medium skill.

Limitation generator 230 calculates a mean value and a standard deviation of each of the maximum vehicle speed, the maximum steering angle (left), and the maximum steering angle (right) as a result of statistical processing for each corresponding remote operation event No. FIG. 13 is a diagram explaining limitation value calculation according to this embodiment. Specifically, FIG. 13 illustrates the mean value and standard deviation of maximum vehicle speed for each corresponding remote operation event No.

[0157] As illustrated in FIG. 13, in "No. 1 move to original route", the mean value of maximum vehicle speed (then maximum vehicle speed) during operation is 6 km/h, and the standard deviation of maximum vehicle speed during operation is 1.3 km/h. This is the result of extracting the maximum vehicle speed of only "No. 1 move to original route" from the remote operation history information illustrated in FIG. 12 and calculating the mean value and the standard deviation based on the extracted maximum vehicle speed.

Limitation generator 230 calculates the limitation value based on the mean value and the standard deviation. The upper limit and lower limit of the limitation value are calculated according to the following equations 1 and 2, where x is the mean value, $\sigma$ is the standard deviation, and n is a parameter.

$$\text{Upper limit} = x + n\sigma \quad (\text{equation 1}).$$

$$\text{Lower limit} = x - n\sigma \quad (\text{equation 2}).$$

By using the standard deviation in this way, the upper and lower limits can be set so as to include most probable values estimated based on the past history. Parameter n is set beforehand in consideration of the travel safety. Not both of the upper and lower limits of the limitation value is necessarily set, as long as at least one of the upper and lower limits is set in consideration of the travel safety. For the maximum vehicle speed, only the upper limit out of the upper and lower limits of the limitation value may be set. For each of the maximum steering angle (left) and the maximum steering angle (right), data is extracted and a limitation value is calculated based on the statistical value of the extracted data, as with the maximum vehicle speed. For example, the limitation value of each of the maximum steering angle (left) and the maximum steering angle (right) is calculated according to equations 1 and 2, too.

Although the above describes the case where limitation generator 230 calculates the mean value, etc. based on the corresponding remote operation event No., limitation generator 230 may calculate the mean value, etc. further based on, for example, at least one of remote operator-related information, vehicle-related information, or environment-related information. In this case, limitation generator 230 obtains the at least one of such information in current vehicle 100.

The remote operator-related information is an example of the execution environment of the operation event (task), and includes, for example, at least one of the attribute, ability, or operation history of the remote operator who executes the operation event. Examples of the attribute include information of whether the remote operator is a full-time or concurrent remote operator of vehicle 100, age, and dominant hand. Examples of the ability include driving skill. Examples of the operation history include remotely operated driving history. For example, limitation generator 230 obtains the remote operator-related information from second remote control system 300 or a server that manages remote operator-related information.

The vehicle-related information is an example of the execution environment of the operation event, and includes, for example, at least one of the attribute, ability, or specification of vehicle 100 remotely operated by the execution of the operation event. Examples of the attribute include vehicle type, model year, steering wheel position, and drive system (2WD, 4WD). Examples of the performance include acceleration performance, deceleration performance, and turning performance. Examples of the specification include the weight of vehicle 100, wheelbase, and tire diameter. For example, limitation generator 230 obtains the vehicle-related information from vehicle 100 or a server that manages the catalogs, etc. of vehicle 100.

The environment-related information is an example of the execution environment of the operation event, and includes, for example, at least one of the weather, road surface (road surface state), or traffic environment of the location in which vehicle 100 remotely operated by the execution of the operation event is situated. Examples of the traffic environment include the size of the road and the degree of congestion of the road. For example, limitation generator 230 obtains the environment-related information from the results of image analysis of images captured by the imaging device in vehicle 100 or a server that manages weather and traffic information.

At least one of such information may be included in the remote operation history information.

Limitation generator 230 may determine the limitation value according to the operation event and the execution environment. For example, limitation generator 230 may extract, from the remote operation history information, the maximum vehicle speed when the remote operation event No. and at least one of remote operator-related information, vehicle-related information, or environment-related information match, and calculates the mean value, etc. from the extracted maximum speed. Thus, the limitation value more suitable for the current status of vehicle 100 can be generated.

Referring back to FIG. 2, server 200 transmits the generated limitation value and the remote operation start signal to edge system 130 mounted on vehicle 100 (S22). Having received the limitation value and the remote operation start signal, edge system 130 stores the limitation value, and outputs the remote operation start signal to first remote control system 120 (S23). The limitation value received by edge system 130 is the limitation value based on the event determination information transmitted in Step S16 and is the limitation value of vehicle 100 in the remote operation.

Having obtained the remote operation start signal, first remote control system 120 transitions to a state of being capable of operating vehicle 100, and outputs a preparation completion signal to edge system 130 (S24). Edge system 130 transmits the preparation completion signal obtained from first remote control system 120, to server 200 (S25). Server 200 then transmits the preparation completion signal obtained from edge system 130, to second remote control system 300 (S26).

Having received the preparation completion signal from server 200, second remote control system 300 may notify the remote operator of the reception of the preparation completion signal by causing display 330 to display the reception. Second remote control system 300 then starts remote operation of vehicle 100. In detail, operation signal processor 310 accepts a remote operation instruction by the remote operator (S27). For example, operation signal processor 310 accepts an operation on the operation input device. Operation signal processor 310 then transmits the accepted remote operation instruction to server 200 (S28). For example, operation signal processor 310 transmits the accepted remote operation instruction to server 200 via operation signal transmitter 320. For example, the limitation value is not applied to the remote operation instruction transmitted to server 200.

Server 200 then transmits the remote operation instruction received from second remote control system 300, to edge system 130 (S29). Server 200 transmits the remote operation instruction according to the operation event to edge system 130. For example, the limitation value is not applied to the remote operation instruction in server 200, either. In other words, server 200 transfers the remote operation instruction received from second remote control system 300, to edge system 130.

Having received the remote operation instruction, limitation applier 133 in edge system 130 applies the limitation value to the remote operation instruction (S30). Limitation applier 133 causes vehicle 100 to execute travel control according to the remote operation instruction under the received limitation value. Thus, the limitation value is imposed when vehicle 100 executes the travel control according to the remote operation instruction from the remote operator. That is, the limitation value is imposed when the remote operation instruction from the remote operator is received.

Limitation applier 133 determines whether the remote operation instruction satisfies the limitation value. In the case where the remote operation instruction does not satisfy the limitation value, limitation applier 133 applies the limitation value and updates the remote operation instruction so as to satisfy the limitation value. Thus, the determined limitation value is imposed when vehicle 100 executes travel control according to the operation event. That is, the determined limitation value is imposed when the remote operator performs travel control by remote operation.

The operation of applying the limitation value by limitation applier 133 in edge system 130 will be described below, with reference to FIG. 14. FIG. 14 is a flowchart illustrating the operation of applying the limitation value in FIG. 2. The following description relates to the speed included in the remote operation instruction, but limitation applier 133 performs the determination illustrated in FIG. 14 for each of the speed and the steering angle (right and left).

As illustrated in FIG. 14, having received the remote operation instruction (S301), limitation applier 133 determines whether the remote operation instruction is higher than the upper limit of the limitation value (S302). For example, limitation applier 133 determines whether the speed included in the remote operation instruction is higher than the upper limit of the maximum vehicle speed.

In the case where the remote operation instruction is higher than the upper limit (S302: yes), limitation applier 133 sets the remote operation instruction after the limitation application to the upper limit (S303). Limitation applier 133, for example, updates the speed included in the remote operation instruction to the upper limit of the maximum vehicle speed. Limitation applier 133 then ends the operation of applying the limitation value, and advances to Step S31.

In the case where the remote operation instruction is lower than the upper limit (S302: no), limitation applier 133 determines whether the remote operation instruction is lower than the lower limit (S304). For example, limitation applier 133 determines whether the speed included in the remote operation instruction is lower than the lower limit of the maximum vehicle speed.

In the case where the remote operation instruction is lower than the lower limit (S304: yes), limitation applier 133 sets the remote operation instruction after the limitation application to the lower limit (S305). Limitation applier 133, for example, updates the speed included in the remote operation instruction to the lower limit of the maximum vehicle speed. Limitation applier 133 then ends the operation of applying the limitation value, and advances to Step S31.

In the case where the remote operation instruction is higher than the lower limit (S304: no), i.e. in the case where the remote operation instruction is between the upper and lower limits, limitation applier 133 sets the remote operation instruction after the limitation application to the remote operation instruction (S306). Here, limitation applier 133 does not update the received remote operation instruction. Limitation applier 133 then ends the operation of applying the limitation value, and advances to Step S31.

Referring back to FIG. 2, limitation applier 133 transmits the remote operation instruction after the limitation application to first remote control system 120 (S31).

First remote control system 120 then controls the travel of vehicle 100 based on the remote operation instruction after the limitation application (S32).

Thus, in the case where the remote operation instruction by the remote operator does not satisfy the limitation value corresponding to the operation event, edge system 130 applies the limitation value to the remote operation instruction, so that vehicle 100 can travel while satisfying the limitation value. Since the limitation value is generated for each operation event, imposing an unnecessary travel limitation can be prevented as compared with the case where the travel limitation is uniformly set. A decrease in the efficiency of remote operation by the remote operator can thus be suppressed. Moreover, server 200 can impose a travel limitation specific to each operation event, so that the safety during remote operation can be further enhanced. In addition, by presenting the operation event, the remote operator can be made aware of the purpose of the remote operation. Reduction of redundant operation by the remote operator can thus be expected.

As described above, for example, edge system 130 is a terminal mounted on vehicle 100, and: determines whether an event (occurred event) that requires remote operation of vehicle 100 has occurred (S13); transmits determined event determination information (S16); receives a limitation value of vehicle 100 in the remote operation; receives a remote operation instruction; and causes vehicle 100 to execute travel control according to the remote operation instruction under the received limitation value. For example, edge system 130 is a terminal mounted on vehicle 100, and includes: switching determiner 132 that determines whether an event (occurred event) that requires remote operation of vehicle 100 has occurred; transmitter-receiver 131 that transmits determined event determination information; transmitter-receiver 131 that receives a limitation value of vehicle 100 in the remote operation and a remote operation instruction; and limitation applier 133 that causes vehicle 100 to execute travel control according to the remote operation instruction under the received limitation value.

The process in Step S13 may be performed by server 200. That is, server 200 may have the function of switching determiner 132. In this case, however, it is necessary to transmit information necessary for the switching determination process from vehicle 100 to server 200 by wireless communication. This increases the time for obtaining the determination result by the time required for the transmission, as compared with the case where edge system 130 performs the determination. Moreover, for example in the case where a delay occurs in the communication between vehicle 100 and server 200, it takes more time to obtain the determination result. Therefore, switching determiner 132 may be included in edge system 130 (i.e. vehicle 100) from the viewpoint of performing switching determination in real time as much as possible.

The process in Step S30 may be performed by server 200. That is, server 200 may have the function of limitation applier 133. In this case, the limitation value need not be transmitted to edge system 130. Consequently, the throughput in edge system 130 can be reduced.

Although the foregoing embodiment describes an example in which limitation generator 230 generates a limitation value in limitation generation, the present disclosure is not limited to such. Limitation generator 230 may set an item (speed, acceleration, steering angle, etc.) for which a limitation value is set, instead of or in addition to generating the limitation value. That is, an item for which a limitation value is set may be set for each operation event. As a result of a list of items for which limitations are imposed being included in the remote operation history information, limitation generator 230 can set an item for which a limitation value is set. Setting an item is an example of determining a travel limitation.

The history of the current remote operation is also added to the remote operation history information illustrated in FIG. 12. In other words, the remote operation history information is updated. The amount of remote operation history information accumulated increases in this way, with it being possible to determine a more accurate limitation value.

(Other Embodiments)

While the presently disclosed techniques have been described above by way of embodiments, the present disclosure is not limited to such embodiments. Other modifications obtained by applying various changes conceivable by a person skilled in the art to the embodiments and any combinations of the structural elements in different embodiments without departing from the scope of the present disclosure are also included in the scope of one or more aspects of the present disclosure.

For example, although the foregoing embodiment describes an example in which the mobile body is a vehicle, the present disclosure is not limited to such. The mobile body is not limited as long as it is capable of switching between autonomous driving and remotely operated driving, and may be a robot, unmanned aerial vehicle (for example, a drone), or the like capable of autonomous traveling.

Although the foregoing embodiment describes an example in which the vehicle selectively switches between the autonomous driving mode and the remote operation mode, the travel modes of the vehicle are not limited to such. For example, the vehicle may further have a manual driving mode of traveling by manual driving by a driver, and be capable of selectively switching among three travel modes. In the case where the vehicle travels in the manual driving mode, the autonomous driving mode and the remote operation mode are off. In the case where the vehicle has the manual driving mode, the driver is included in one or more persons riding in the mobile body.

Although the foregoing embodiment describes an example in which the server causes the remote operator to select an operation event, the server is not limited to causing the remote operator to select an operation event. The server may determine an operation event in remote operation. For example, in the case where only one operation event corresponds to the event determination information (occurred event) in the event list, the server may determine the operation event as an operation event to be executed. In this case, the server may transmit information indicating the determined operation event to the remote operation system. The information indicating the determined operation event is included in the operation event information.

Part of the processes performed by the edge system in the foregoing embodiment may be performed by the server. For example, at least one of the process by the switching determiner or the process by the limitation applier may be executed by the server. The server may have the function of the switching determiner and the function of the limitation applier.

Although the foregoing embodiment describes an example in which the limitation generator calculates the limitation value based on the mean value and standard deviation of maximum vehicle speed or the like, the present disclosure is not limited to such as long as a statistical value of past history of maximum vehicle speed or the like is used. For example, the limitation generator may calculate the limitation value by performing computation on the mean value using a predetermined coefficient.

The communication between the vehicle and the server and the communication between the server and the second remote control system in the foregoing embodiment are, for example, wireless communication. Alternatively, the communication may be wired communication. For example, the communication between the server and the remote control system may be wired communication.

Although the foregoing embodiment describes an example in which the machine learning model is a machine learning model using a neural network, any other machine learning model may be used. For example, the machine learning model may be a machine learning model using random forest, genetic programming, or the like, or any other machine learning model.

The foregoing embodiment describes an example in which the travel limitation is transmitted to the mobile body and travel control according to the remote operation instruction is executed in the mobile body under the received travel limitation. Alternatively, travel control according to the remote operation instruction may be determined in the server under the travel limitation, and the determined travel control may be transmitted to the mobile body and executed in the mobile body.

For example, in the case where a fast and highly reliable communication scheme such as 5G (generation) communication is used in the communication between the mobile body and the server, it is assumed that travel control is determined in the server and the determined travel control is executed in the mobile body. In this case, as a result of the determination of the travel control in the server being performed under the travel limitation, the travel control on which the travel limitation is imposed is executed in the mobile body.

Even in such a case where the travel control is determined in the device that remotely operates the mobile body, the travel control to be executed by the mobile body can be determined in consideration of the travel limitation.

The orders of a plurality of processes described in the foregoing embodiment and the like are merely examples. A plurality of processes may be changed in order, and a plurality of processes may be performed in parallel. Part of a plurality of processing may be omitted.

The elements described in the foregoing embodiment and the like may be realized by software, and may be typically realized by LSI which is an integrated circuit. The elements may each be individually implemented as one chip, or may be partly or wholly implemented on one chip. While description has been made regarding LSI, there are different names such as IC, system LSI, super LSI, and ultra LSI, depending on the degree of integration. The circuit integration technique is not limited to LSIs, and dedicated circuits or general-purpose processors may be used to achieve the same. A field programmable gate array (FPGA) which can be programmed after manufacturing the LSI, or a reconfigurable processor where circuit cell connections and settings within the LSI can be reconfigured, may be used. Further, in the event of the advent of an integrated circuit technology which would replace LSIs by advance of semiconductor technology or a separate technology derived therefrom, such a technology may be used for integration of the elements.

The division of the functional blocks in each block diagram is an example, and a plurality of functional blocks may be realized as one functional block, one functional block may be divided into a plurality of functional blocks, or part of functions may be transferred to another functional block. Moreover, functions of a plurality of functional blocks having similar functions may be realized by single hardware or software in parallel or in a time-sharing manner.

The server may be realized as a single device or a plurality of devices. In the case where the server is realized by a plurality of devices, the elements in the server may be allocated to the plurality of devices in any way. The method of communication between the plurality of devices is not limited.

The presently disclosed techniques may be the foregoing program, or a non-transitory computer-readable recording medium having the program recorded thereon. The program can be distributed through a transmission medium such as the Internet. For example, the program or a digital signal including the program may be transmitted over an electric communication line, a wireless or wired communication line, a network such as the Internet, data broadcasting, or the like. The program or the digital signal including the program may be executed by another independent computer system, as a result of the program or the digital signal being recorded in a recording medium and being transported or as a result of the program or the digital signal being transferred over a network or the like.

Each of the elements in each of the above-described embodiments may be configured in the form of an exclusive hardware product, or may be realized by executing a software program suitable for the element. Each of the elements may be realized by means of a program executing unit, such as a CPU or a processor, reading and executing the software program recorded on a recording medium such as a hard disk or a semiconductor memory.

[Industrial Applicability]

The presently disclosed techniques can be widely used in systems that operate remotely operable mobile bodies.

[Reference Signs List]

| | |
|---|---|
| 10 | vehicle control system (information processing system) |
| 100 | vehicle |
| 110 | autonomous driving system |
| 111, 121 | vehicle controller |
| 112 | notifier |
| 120 | first remote control system |
| 122 | video transmitter |
| 130 | edge system (information processing terminal) |
| 131 | transmitter-receiver (transmitter, receiver) |
| 132 | switching determiner (determiner) |
| 133 | limitation applier (controller) |
| 134 | vehicle position obtainer |
| 135 | anomaly detector |
| 200 | server |
| 210 | operation event determiner (specifier) |
| 220 | operation event estimator |
| 230 | limitation generator (determiner) |
| 240 | storage |
| 300 | second remote control system |
| 310 | operation signal processor |
| 320 | operation signal transmitter |
| 330 | display |
| 340 | accepter |
| 350 | video receiver |
| 400 | road |

**Claims**

**1.** An information processing method executed by a computer, the information processing method comprising:

specifying, when information of an event that requires remote operation of a mobile body is received, a task of the remote operation corresponding to the event; and
determining a travel limitation of the mobile body in the remote operation according to the task specified, wherein the travel limitation determined is imposed when the mobile body executes travel control according to the task.

2. The information processing method according to claim 1, comprising:

obtaining an execution environment of the task,
wherein in the determining, the travel limitation is determined according to the task and the execution environment.

3. The information processing method according to claim 2,
wherein the execution environment includes at least one of an attribute, an ability, or an operation history of a remote operator who executes the task.

4. The information processing method according to claim 2 or claim 3,
wherein the execution environment includes at least one of an attribute, a performance, or a specification of the mobile body remotely operated by execution of the task.

5. The information processing method according to any one of claim 2 to claim 4,
wherein the execution environment includes at least one of weather, a road surface state, or a traffic environment of a location in which the mobile body remotely operated by execution of the task is situated.

6. The information processing method according to any one of claim 2 to claim 5,
wherein in the determining, the travel limitation is determined using a model generated based on past tasks and execution environments.

7. The information processing method according to any one of claim 1 to claim 6,
wherein the specifying includes specifying one or more candidate tasks that are each a task estimated based on the information of the event, presenting the one or more candidate tasks specified to a remote operator, and specifying the task according to input of the remote operator based on the one or more candidate tasks presented.

8. The information processing method according to claim 7,
wherein the one or more candidate tasks presented are each specified using a model generated based on the information of the event at each past time and input of the remote operator based on the candidate task at the past time.

9. The information processing method according to any one of claim 1 to claim 8,
wherein the travel limitation determined is imposed when the mobile body executes the travel control according to an instruction of the remote operation according to the task specified.

10. The information processing method according to any one of claim 1 to claim 9,
wherein the travel limitation includes a limitation on at least one of speed, acceleration, braking, or steering.

11. The information processing method according to any one of claim 1 to claim 10, further comprising:

transmitting the travel limitation determined to a terminal mounted on the mobile body,
wherein the travel control according to an instruction of the remote operation is executed in the mobile body under the travel limitation transmitted.

12. The information processing method according to any one of claim 1 to claim 11, further comprising:

determining the travel control according to an instruction of the remote operation under the travel limitation; and
transmitting the travel control determined to a terminal mounted on the mobile body,
wherein the travel control transmitted is executed in the mobile body.

13. An information processing terminal mountable on a mobile body, the information processing terminal comprising:

a determiner that determines whether an event that requires remote operation of the mobile body has occurred;

a transmitter that transmits information of the event, when the event has occurred;

a receiver that receives a travel limitation of the mobile body in the remote operation and an instruction of the remote operation based on the information of the event transmitted; and

a controller that causes the mobile body to execute travel control according to the instruction of the remote operation under the travel limitation received.

14. An information processing system comprising:

a determiner that determines whether an event that requires remote operation of a mobile body has occurred;

a specifier that specifies a task of the remote operation corresponding to the event, when the determiner determines that the event has occurred;

a determiner that determines a travel limitation of the mobile body in the remote operation according to the task specified; and

a controller that imposes the travel limitation determined, when the mobile body executes travel control according to the task specified.

# FIG. 1

EP 4 174 818 A1

## FIG. 2

| 110 Autonomous driving system | 120 First remote control system | 130 Edge system | 200 Server | 300 Second remote control system |
|---|---|---|---|---|

State notification — S11

Instruction notification — S12

Determine whether switching is needed — S13

Autonomous driving stop signal — S14

Remote operation start signal, event determination information — S16

Autonomous driving stop completion signal — S15

Specify operation event as candidate — S17

Operation event information — S18

Present operation event information and accept selection — S19

Selection information — S20

Generate limitation value — S21

Limitation value, remote operation start signal — S22

Remote operation start signal — S23

Preparation completion signal — S24

Preparation completion signal — S25

Preparation completion signal — S26

Accept remote operation instruction — S27

Remote operation instruction — S28

Remote operation instruction — S29

Apply limitation value — S30

Remote operation instruction after limitation application — S31

Remote operation instruction after limitation application — S32

# FIG. 3

S13

Determine whether switching is needed

Remote operation switching instruction obtained from server? —S101 → yes

no

Receive autonomous driving system state —S102

Receive anomaly detection result —S103

—S104
yes ← System anomaly? → no

S105
Search switching determination list for anomaly

S106
yes ← Anomaly included in list? → no

S107
Correspond to need for switching to remote operation? → yes

S108
no
Determine that switching to remote operation is not needed

End

S109
Notify server of anomaly

S110
Determine that switching to remote operation is not needed

End

S111
Stop for long time? → yes

no —S112
Determine that switching to remote operation is not needed

End

S113
Determine that switching to remote operation is needed

To S16

## FIG. 4

| Item | Obtainment method | Contents |
|---|---|---|
| Autonomous driving system state | State notification from autonomous driving system | Normal or anomalous, error code when anomalous |
| Anomaly detection result | Anomaly detector in edge system | Normal or anomalous, error code when anomalous |
| Vehicle travel state | State notification from autonomous driving system | - Travel by autonomous driving (vehicle speed > 0)<br>- Vehicle stop (autonomous driving system instructs to stop)<br>- Before start of travel by autonomous driving<br>- End of travel by autonomous driving |

EP 4 174 818 A1

FIG. 5

| Event determination information | Whether switching to remote operation is needed |
|---|---|
| No.1 deviation from travel route | Needed |
| No.2 vehicle speed control error | Needed |
| No.3 vehicle speed information anomaly | Needed |
| No.4 vehicle position obtainment failure | Needed |
| No.5 camera trouble | Needed |
| No.6 long time stop | Needed |
| No.7 motor trouble | Not needed |

# FIG. 6

S17

Specify operation event as candidate

S201 — Remote operation start signal received from edge system? → no

yes

S202 — Receive event determination information from edge system

S203 — Search event list for anomaly

S204 — Anomaly included in list?

yes

no

S205 — Corresponding operation
event = determination result

S206 — No determination result
(no recommendation)

End

# FIG. 7

| Event determination information | Operation event |
|---|---|
| No.1 deviation from travel route | - No.1 move to original route<br>- No.2 move to destination |
| No.2 vehicle speed control error | - No.3 pull over<br>- No.4 wait |
| No.3 vehicle speed information anomaly | - No.4 wait |
| No.4 vehicle position obtainment failure | - No.3 pull over<br>- No.2 move to destination |
| No.5 camera trouble | - No.3 pull over<br>- No.2 move to destination |
| No.6 long time stop | - No. 5 avoid obstacle on travel route<br>- No.3 pull over<br>- No.4 wait |
| ⋮ | ⋮ |

# FIG. 8

330, 340

Which event corresponds to current remote operation?

| Avoid obstacle on travel route |

| Pull over |

| Wait |

| N/A |

# FIG. 9

330, 340

Select corresponding event

| Temporarily pull over |

| Move to destination |

| Return vehicle to travel route |

| Others |

1 2 3 ··· 5

# FIG. 10

Remote operation status history information

| Remote operation history No. | Corresponding remote operation event No. | Remote operation start position | Center of obstacle 1 (vehicle coordinate system x,y) | Identification result of obstacle 1 | Dimensions of obstacle 1 | Center of obstacle 2 | Identification result of obstacle 2 | … |
|---|---|---|---|---|---|---|---|---|
| No.1001 | - No.2 move to destination | E135.323 N34.413 | 5 m, 12 m | Person | … | … | … | … |
| No.1002 | - No.2 move to destination | E135.121 N34.523 | 6 m, 2 m | Vehicle | … | … | … | … |
| No.1003 | - No.3 pull over | E135.364 N34.612 | 8 m, 5 m | Unknown | … | … | … | … |
| No.1004 | - No.2 move to destination | E135.752 N34.892 | 1 m, 11 m | Bicycle | … | … | … | … |
| No.1005 | - No. 5 avoid obstacle on travel route | E135.734 N34.427 | 5 m, 2 m | Vehicle | … | … | … | … |
| ⋮ | ⋮ | ⋮ | ⋮ | ⋮ | … | … | … | … |

FIG. 11

Current position, obstacle information

| Remote operation start position | Center of obstacle 1 (vehicle coordinate system x,y) | Identification result of obstacle 1 | Dimensions of obstacle 1 | Center of obstacle 2 | Identification result of obstacle 2 | ... |
|---|---|---|---|---|---|---|
| E135.323 N34.413 | 5 m, 12 m | Person | ... | ... | ... | ... |

EP 4 174 818 A1

## FIG. 12

Remote operation history information

| Remote operation history No. | Vehicle type | Remote operator skill | Corresponding remote operation event No. | Then maximum vehicle speed | Then maximum steering angle (left) | Then maximum steering angle (right) | |
|---|---|---|---|---|---|---|---|
| No.1001 | A | Medium | - No.2 move to destination | 6 km/h | 21° | 21° | ... |
| No.1002 | C | Medium | - No.2 move to destination | 3 km/h | 11° | 1° | ... |
| No.1003 | D | Low | - No.3 pull over | 6 km/h | 6° | 19° | ... |
| No.1004 | C | High | - No.2 move to destination | 15 km/h | 7° | 15° | ... |
| No.1005 | D | High | - No. 5 avoid obstacle on travel route | 13 km/h | 21° | 5° | ... |
| ⋮ | ⋮ | | ⋮ | ⋮ | ⋮ | ⋮ | ... |

FIG. 13

| Corresponding remote operation event No. | Average value of maximum vehicle speed during operation | Standard deviation of maximum vehicle speed during operation | ... |
|---|---|---|---|
| - No.1 move to original route | 6 km/h | 1.3 km/h | ... |
| - No.2 move to destination | 15 km/h | 2.1 km/h | ... |
| - No.3 pull over | 8 km/h | 1.5 km/h | ... |
| ⋮ | ⋮ | ⋮ | ... |

EP 4 174 818 A1

## FIG. 14

# FIG. 15

<Avoid road work>

Necessary limitations: vehicle speed: low,
steering angle: large, acceleration: low, …

# FIG. 16

<Pull over due to passage of emergency vehicle>

Necessary limitations: vehicle speed: medium,
steering angle: small, acceleration: medium, ...

## INTERNATIONAL SEARCH REPORT

| | International application No. |
|---|---|
| | PCT/JP2021/015473 |

### A. CLASSIFICATION OF SUBJECT MATTER

Int. Cl. G08G1/09(2006.01)i, B60W40/04(2006.01)i, B60W40/06(2012.01)i,
B60W60/00(2020.01)i, G05D1/00(2006.01)i
FI: G08G1/09 V, B60W40/04, B60W40/06, B60W60/00, G05D1/00 B, G08G1/09 F

According to International Patent Classification (IPC) or to both national classification and IPC

### B. FIELDS SEARCHED

Minimum documentation searched (classification system followed by classification symbols)
Int. Cl. G08G1/09, B60W40/04, B60W40/06, B60W60/00, G05D1/00

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 2019/0219999 A1 (FARFETCH UK LIMITED) 18 July 2019, paragraphs [0047]-[0076], [0111]-[0130], fig. 1A-2B, 6-10 | 1-6, 9-14 |
| X | JP 2019-537140 A (QUALCOMM INC.) 19 December 2019, claims, paragraphs [0014]-[0019], [0033]-[0059], fig. 1, 2, 4A-5, claims, paragraphs [0014]-[0019], [0033]-[0059], fig. 1, 2, 4A-5 | 1-5, 9-14 |
| Y | | 7-8 |
| Y | JP 2019-191982 A (SOKEN INC.) 31 October 2019, paragraph [0026] | 7-8 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11.06.2021 | 22.06.2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application No.

PCT/JP2021/015473

| Patent Documents referred to in the Report | Publication Date | Patent Family | Publication Date |
|---|---|---|---|
| US 2019/0219999 A1 | 18.07.2019 | GB 2563962 A<br>WO 2019/122933 A1<br>EP 3503015 A1 | |
| JP 2019-537140 A | 19.12.2019 | US 2018/0136669 A1<br>paragraphs [0022]-[0027], [0041]-[0063], fig. 1, 2, 4A-5<br>US 2019/0220041 A1<br>WO 2018/089128 A1<br>CN 109906416 A<br>KR 10-2019-0076985 A | |
| JP 2019-191982 A | 31.10.2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017126193 A